# EUROPEAN PATENT APPLICATION

(11) **EP 0 955 559 A1**
(43) Date of publication of application: **10.11.1999**
(21) Application number: 99106034.4
(22) Date of filing: 25.03.1999
(51) Int. Cl.: G02B 6/35

(54) **Optical switch**

(30) Priority: 10.04.1998 EP 98106651
(71) Applicant: PIRELLI CAVI E SISTEMI S.p.A., 20126 Milano (IT)
(72) Inventor: Milanese, Paolo, 27020 Olevano di Lomellina (PV) (IT); Pianciola, Aurelio, 27045 Casteggio (PV) (IT); Galeotti, Adriano, 20129 Milano (IT)
(74) Representative: Giannesi, Pier Giovanni

(57) **Abstract**

Optical switch comprising an input optical collimator (4) having a first axis of collimation (O) of an optical beam, two output optical collimators (5,6), one having a second axis and one having a third axis of collimation of an optical beam, and a device (1,2) for the distribution of the optical beam directed along the said first collimation axis towards one of the said second and third axes of collimation of the optical beam. The said device comprises at least one reflector (1,2) movable between a first and a second predetermined position, which provides an optical connecting path between the said input collimator and one of the said output collimators, in which each of the said first and second positions corresponds to the selection of one of the said output collimators.

## Description

The present invention relates to an optical switching device.

More particularly, the present invention relates to an optical-mechanical switching device, in other words a device capable of selectively transmitting an optical signal from an input optical fibre to one of a plurality of output optical fibres, following the mechanical actuation of a switching element.

Two different technologies are generally used for the construction of these switching devices. A first technology essentially comprises at least one moving fibre which is directed to guide the optical beam from it to at least one further optical fibre.

In a second technology there is generally present at least one moving optical element which changes its position or its orientation from one position to other positions, in such a way as to change the direction of an input optical channel to a number of positions, each corresponding to one output optical channel. These moving optical elements are generally elements which reflect the optical signal.

The said first technology is described, for example, in US Patent No. 4,569,569 which relates to wavelength-based combined optical devices, switches and couplers in which the direction or form of the light is modified.

In particular, this patent describes an optical switch comprising a combination of optical fibres of which a first optical fibre is capable of emitting light, a plurality of second optical fibres is disposed at a predetermined distance and position with respect to the said first optical fibre, and means for enabling the said combination of optical fibres to rotate.

The switch also comprises a "corner cube" retroreflector, having an angle of at least 90° between its internal faces, which enables the reflected light to be displaced by an amount equal to the distance between the said first optical fibre and the second optical fibres, and means for retaining the said retroreflector in a position in which the said combination of optical fibres is disposed frontally with respect to it and at an angle smaller than the maximum operating angle of the retroreflector.

The aforementioned second technology is represented, for example, in US Patent No. 5,481, 631, which describes an optical switching apparatus comprising means of transmitting an optical signal comprising first means of transmitting an optical signal along a primary axis and second means of transmitting an optical signal along a second axis. The said first transmission axis is parallel to the second.

The apparatus also comprises a pair of lenses for the collimation of the radiation, consisting of a primary lens having its focus on the said primary axis and a secondary lens having its focus on the said secondary axis, a retroreflector having an optical axis parallel to the said primary axis, and means for the selective rotation of the said retroreflector from the said primary axis to a plurality of selectable positions, including a position in which the radiation can be transmitted from the said first transmitting means to the said second transmitting means via the retroreflector and the said lenses, and a position in which no radiation can pass from the said first optical signal transmitting means to the second optical signal transmitting means.

The applicant has observed that these devices have a high sensitivity to the effects of misalignment of the moving optical elements, in cases in which these elements move to a different position for each possible optical path of the beam in the switch, from an input to any of the outputs. The multiple positions of the moving optical elements are in fact reached by rotating the said elements through specified angles following each other.

US Patent No. 5,436,986 describes an optical switch comprising a first input optical fibre and a second input optical fibre, a first output optical fibre and a second output optical fibre. The said first input optical fibre is disposed on the same line as the second output optical fibre and is parallel to the said first output optical fibre, and the said second input optical fibre is disposed on the same line as the first output optical fibre and is parallel to the said second output optical fibre. The switch also comprises a lens disposed on each of the terminations of the input and output fibres, and a moving reflector device comprising a first reflector and a second reflector. The first reflector and the second reflector are disposed facing each other on a support and each has two surfaces disposed at angles to each other. The support is actuated by means of movement which dispose the reflectors selectively in a position in which they connect the first input fibre to the first output fibre and the second input fibre to the second output fibre, and in another in which they connect the first input fibre to the second output fibre and the second input fibre to the first output fibre.

The applicant has observed that in said device, in addition to the losses due to the multiplicity of the positions of the retroreflectors, the optical paths vary according to the positions taken by the retroreflectors, and consequently the losses are not equally distributed among the different operating conditions of the switch. Indeed, one path includes a double reflection while the other does not include any reflection. This generates a loss of approximately 0.3 dB due to the double reflection and a loss of at least 0.4 dB due to the difference in path length.

The applicant has observed that, by simplifying the movements of the moving optical elements within a switch, and in particular by having these movements restricted between only two predetermined positions, the losses due to the effects of misalignment of the moving optical elements are considerably reduced.

The applicant has also observed that, by making the beam strike each of the moving optical elements in each switching state of these elements, the losses are made uniform for the different switching states.

According to the present invention, an optical switching device capable of selectively transmitting an input optical beam to at least one of a plurality of output positions uses one or more reflectors, which traverses, or each of which traverses, between two predetermined positions. In the case of a plurality of reflectors, these are disposed in such a way that each receives an input optical beam or an output beam from a preceding reflector, and sends the said beam, in a position corresponding to the position in which they are located, towards a subsequent reflector. The final reflector sends the beam to one of a plurality of output collimators disposed in predetermined positions which the beam reaches according to the various positions in which all the reflectors are located.

This configuration makes it possible to minimize the sensitivity to the effects of misalignment of the moving optical elements which carry out the switching function, namely the said reflectors, and consequently to limit the losses. These losses are not only minimized but are also uniformly distributed among all the possible optical paths of the switch, consequently maintaining a substantial equality of conditions in the beam leaving the switch.

It has also been found that the use of switching of the mechanical type between two predetermined positions of the said moving optical elements which act as devices for guiding the input optical beam to one of the output collimators provides a significant simplification of the commands to be sent to the switching device; these commands may be of the digital type, thus ensuring optimum repeatability of the process.

Furthermore, if these reflectors are trihedral, the effects of misalignment are further decreased and in general the switching becomes more efficient.

According to a first aspect, the present invention relates to an optical switch comprising
- an input optical collimator having a first axis of collimation of an optical beam;
- at least two output optical collimators, one having a second axis and one having a third axis of collimation of an optical beam;
- a device for the distribution of the optical beam directed along the said first collimation axis towards one of the said second and third axes of collimation of the optical beam, comprising at least one reflector movable between a first and a second predetermined position, which provides an optical connecting path, comprising at least one reflection, between the said input collimator and one of the said output collimators, in which each of the said first and second positions corresponds to the selection of one of the said output collimators.

Preferably, the said reflector is a trihedral or corner cube retroreflector.

Alternatively, the said reflector is a prism.

Alternatively, the said reflector is a mirror.

In particular, the said distribution device additionally comprises an actuator for traversing the said reflector between the said first and second positions.

In particular, the said actuator comprises a slide on which the said reflector is fixed in such a way that the axis of the reflector is substantially parallel to the axis of collimation of the said input collimator, a track in which the said slide is fitted slidably and which has a stop wall at each end, and a device for moving the slide from one wall to the other wall of the track.

In particular, the said movement device comprises a pair of electromagnets disposed on the said walls and energized in push-pull mode.

According to a further aspect, the present invention relates to a method for switching optical signals, comprising the following phases:
- generating an optical beam along an optical axis;
- reflecting said beam by means of a reflector;
- moving said reflector to one of two predetermined positions in such a way as to distribute the said beam selectively towards an output collimator.

Preferably, each reflector causes three reflections of the beam.

Alternatively, each reflector causes two reflections of the beam.

Alternatively, each reflector causes one reflection of the beam.

In particular, the said phase of moving the said at least one reflector comprises moving, on a track having a stop wall at each end, a slide on which the said at least one reflector is fixed, by means of a device for moving the slide from one wall to the other wall of the track.

In particular, the phase of moving comprises the energizing of one of a pair of electromagnets disposed on the said walls.

In particular, the said distribution phase comprises:
- reflecting said beam by means of a second reflector
- moving said reflector to one of two predetermined positions in such a way as to distribute the said beam selectively towards an output collimator.

The present invention is described below, by way of example, with reference to the attached figures, in which:
Figure 1 is a schematic representation, seen from above, of the reflections for a switch according to the present invention.
Figure 2 shows a preferred embodiment of the switch shown in Figure 1 in a view from the front in the direction X-X' indicated in Figure 1.
Figure 3 shows the same switch as Figure 2 in a side view in the direction Y-Y' indicated in Figure 1.
Figure 4 shows the possible positions of the retroreflectors for the embodiment of the switch shown in Figure 2.

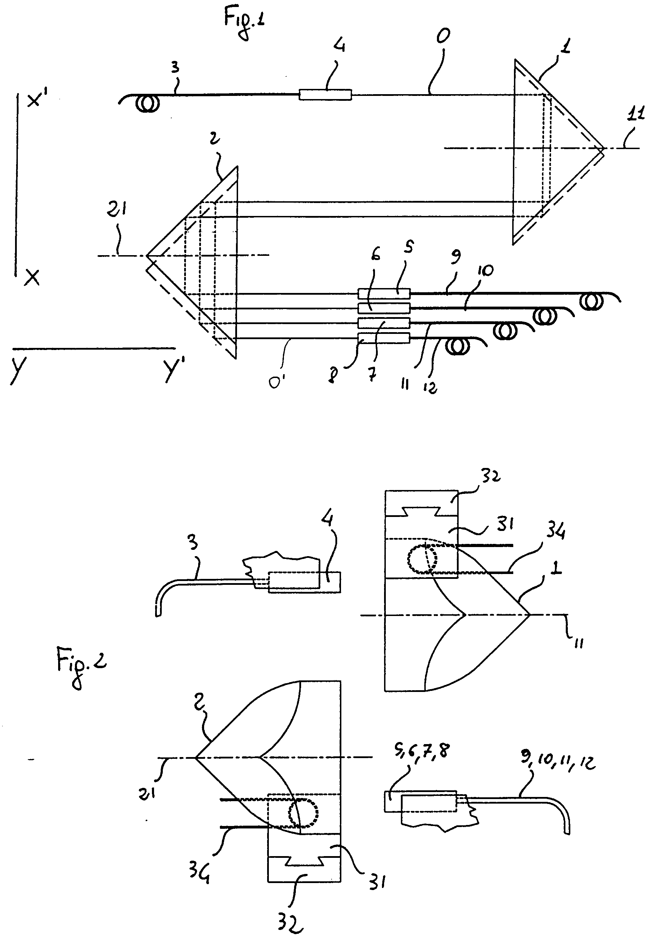

An example of an embodiment of the present invention which has an optical-mechanical switch in a 1 x 4 configuration will be described in detail with reference to the diagram in Figure 1.

It should be noted that the number and type of components shown in the following examples of embodiments are not to be considered as limits to the present invention; the invention is also applicable to configurations having different numbers of inputs and outputs, by providing a corresponding number of reflectors.

For example, Figure 1 shows a switching diagram in which the reflecting element may equally well be a prismatic retroreflector or a trihedral reflector, also called a "corner cube". In the following figures, which illustrate a preferred embodiment of the switch, this reflecting element is a corner cube retroreflector.

The retroreflector is a device which has the property of making the light beams incident on the input surface (in Figure 1, the ideal surface orthogonal to the axis 11) re-emerge in a direction parallel to the direction of the incident beam, for any angle of incidence.

A prism has a pair of flat reflecting surfaces, disposed orthogonally to each other and consequently capable of generating a reflection of the type mentioned above if the beam is incident in a plane perpendicular to the line formed by the intersection of the two reflecting surfaces.

The corner cube has three reflecting surfaces orthogonal to each other like those of an internal corner of a cube; it should be noted that in Figure 1, for the sake of simplicity, only two of the three reflections which take place for each light beam incident on a corner cube are shown.

The switch comprises an input optical fibre 3, followed by a collimation device 4 which makes it possible to have at its output a low-divergence optical beam collimated along a first optical axis O. The said input collimator 4 sends this beam to the input surface of a first retroreflector 1 positioned in such a way that it receives the said optical beam directed along the axis O. In a preferred configuration, the axis 11 of the retroreflector, in other words the axis passing through the vertex of the reflector and orthogonal to the input surface, is substantially parallel to the said optical axis O.

A second retroreflector 2, with the axis 21, in other words the axis passing through the vertex of the reflector and orthogonal to the input surface, which as in the preceding case may preferably be selected to be parallel to the optical axis O, has an input surface directly facing that of the first retroreflector 1.

The corner cube essentially displays the property of reflecting at the output, in a parallel way and in a way independent of its orientation, an incident beam directed in a direction within an acceptance angle. The acceptance angle is a typical parameter of any corner cube and represents the maximum inclination between the incident beam and any of the input reflecting surfaces which permits a retroreflection of this input beam. However, it is possible to select an orientation of the said corner cube, for example one with the axis parallel to the optical axis, in which the limitations imposed by this parameter do not affect the performance of the switch.

Owing to the aforesaid characteristics, therefore, the switch according to the present invention advantageously uses a corner cube reflecting element.

In a such case, each of the defined axes 11 and 21 of both retroreflectors represents the axis passing through the vertex of the corner cube and equidistant from all the three said mutually orthogonal reflecting surfaces which generate the internal corner of the cube.

Each of the corner cubes is provided with an actuator which can traverse it along an axis, preferably orthogonal to the optical axis O. In particular, this traversing actuator makes it possible to disconnect or connect an optical signal emerging from one of the two corner cubes from or to the other along an optical path which can be specified according to the relative positions of the corner cubes.

The corner cubes may advantageously be positioned with respect to each other in such a way as to ensure that the optical beam emerging from them is parallel to the optical axis O' of the devices which receive the said output optical beams.

In this case, the output devices are four collimators 5 - 8, which guide the optical signal from the second retroreflector 2 in four output optical fibres 9 - 12, having axes substantially parallel to the optical axis O and preferably coplanar with the input fibre 3.

Owing to the retroreflectors' aforesaid property of reflecting the beams parallel to the direction of input for any angle of incidence, the operation of the described device is not substantially affected by any errors of angular alignment of the retroreflectors.

The characteristic, described above, of the retroreflector elements makes it possible to obtain a low sensitivity of the device to the effects of angular misalignment of the moving optical elements. In particular, this minimizes the risk of time drift in the losses of optical power of the device between the input and output, due to the said undesired effects of misalignment with respect to the initial positions of the retroreflectors, in the case in which a large number of switching operations are carried out.

The said traversing actuator may, by way of example, comprise a support on which each of the retroreflectors present is fixed and a guide on which the said support is free to traverse between two predetermined positions. In general, any supporting structure for the retroreflector or retroreflectors which permits their precise positioning in one of two predetermined positions is considered suitable for use in the present invention.

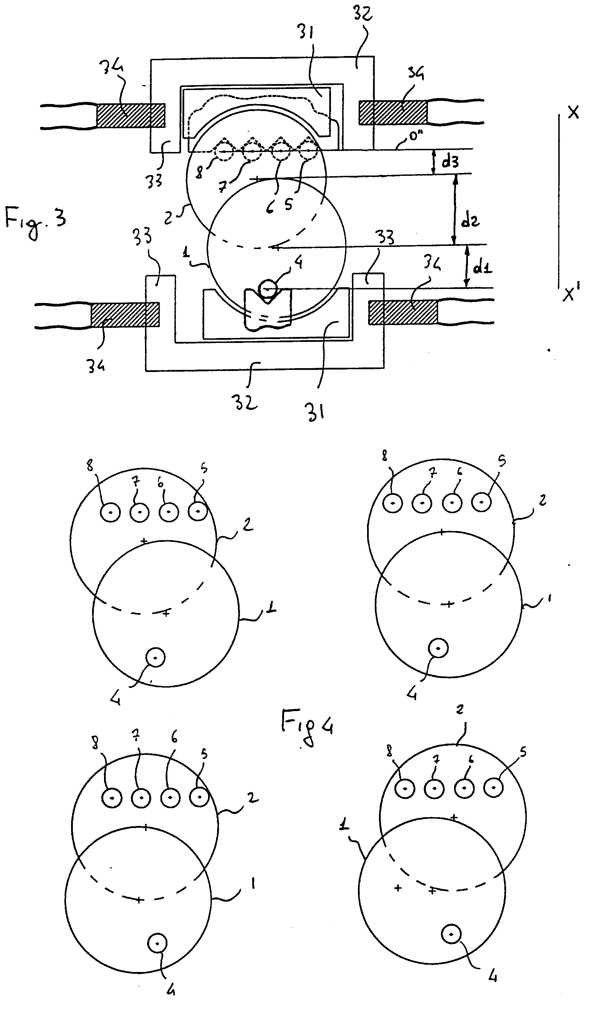

In particular, one embodiment of these traversing actuators is shown in Figures 2 and 3, in which they are present on both the retroreflectors and each comprises a slide 31 on which a retroreflector is fixed in such a way that the axis passing through the vertex of the retroreflector is substantially parallel to the optical axis O. This slide 31 is fitted slidably in a track 32 having a stop wall 33 at each end. This enables the retroreflector mounted on the slide 31 to traverse and to stop in two positions in a precise and repeatable way, in each of which positions one side of the slide is in contact with one of the said walls 33. Alternatively, this actuator may comprise a cylindrical sleeve, on which the corner cubes are mounted, and which traverses along a shaft between two predetermined positions.

In all the examples of embodiment, the traversing between the two predetermined positions of the corner cubes takes place by means of a suitable movement device which in a preferred embodiment of the invention comprises a pair of electromagnets 34, disposed on the said walls 33, and suitably energized to allow the alternating movement of the slide between the two permitted positions.

The two electromagnets are energized in push-pull mode, through an electronic switch which switches the electrical signal between them.

Alternatively, this movement device may comprise a mechanism using a continuous or stepping motor, associated with a mechanical device which converts the rotary movement of the motor into a traversing movement which enables the corner cubes to be moved alternately between the two permitted positions, for example a device of the crank and connecting rod, rack, screw, or other similar type. Additionally, the switching between the two permitted positions for each corner cube may also be carried out manually if the number of switching operations in a given time is limited; in this case, therefore, this movement device is of the manual type, consisting for example of a lever acting on the slide, or an equivalent manual system.

In the embodiment of the invention corresponding to the diagram in Figure 1, commercially available lens collimators were used, collimating optical beams with diameters from 0.22 mm to more than 20 mm and having an insertion loss of 0.6 dB in the case in which a collimator is 60 mm away from an identical collimator and a loss of 0.3 dB in the case in which the two collimators are 20 mm apart from each other. In this configuration, the terminations of the input optical fibres are disposed in the focal planes of these lenses.

A collimator of this type is, for example, the LPC-01 made by OZ-OPTICS.

Use was also made of commercially available corner cubes with input surface diameters ranging from 5 mm to 15 mm and heights, in other words the distances between these input surfaces and the vertices, ranging from 11.3 mm to 18.8 mm.

A corner cube of this type is, for example, the type B corner cube made from fused silica by Spandler & Hoyer.

The arrangement of the components to form the switch according to a particular embodiment of the invention was carried out in accordance with the aforesaid dimensional parameters. Thus, with reference to Figure 3, the input collimator with a diameter of 2.5 mm is positioned in such a way that its optical axis O is parallel to the axis 11 of the first corner cube 1 and that the distance d1 between the said two axes in the direction X-X' is 4.5 mm. Both the corner cubes used are advantageously of equal dimensions, each having a diameter of 7.5 mm and a height of 11.3 mm. They are disposed facing each other at a distance d2 of 7.5 mm between the corresponding axes in the direction X-X'. The slides which support them allow them to move parallel to each other and orthogonally to the optical axis O.

The output collimators, with dimensions equal to those of the input collimator, are disposed parallel to each other and with a distance of 3 mm between their axes. The distance d3 in the direction X-X' between the axis of the second corner cube 2 and the axis O'' which passes through all the centres of the collimators is 3 mm.

The slide used for the first corner cube 1 allows it to have a travel of 1.5 mm between the two stop positions, and the slide used for the second corner cube allows it to have a travel of 3 mm between the two stop positions. In this case, the maximum tolerance permitted for each of the stop positions is 10 µm. When the corner cubes are in the positions of maximum distance from each other, their axes are 2.25 mm apart from each other with respect to the axis of movement orthogonal to the axis O.

With these dimensional parameters, in the example of embodiment corresponding to the diagram in Figure 1, a switching device has been constructed which enables an optical signal from the input fibre 3 to be transmitted to one of the output fibres 9 - 12 by deflecting the optical beam by means of the said corner cubes 1 and 2. Each of these corner cubes may take up two different positions on the traversing axis, one of these positions being shown in solid lines and the other in broken lines in Figure 1.

For both corner cubes, the position indicated in Figure 1 by solid lines is termed the first position and that indicated by broken lines is termed the second position.

As an explanatory example, the transmission of an optical signal from the input fibre 3 to the output fibre 12 is described: the optical signal present at the input fibre 3 is sent through the air with low divergence from the collimator 4 and collected by the first corner cube 1 located in the first position, which retroreflects it towards the second corner cube 2 located in the second position. The relative distances between the axes of the input optical fibre 3 and of the output fibre 12 and the axes of the corner cubes 11 and 21 are set in such a way as to ensure that the optical signal emerging from the corner cube 2 strikes the collimator 8 and is therefore present in the desired output fibre 12.

The other positions of the corner cubes 1 and 2 for the other types of connection possible with this particular embodiment of the invention are also described below:
- from the input fibre 3 to the output fibre 11, both corner cubes 1 and 2 in the second position;
- from the input fibre 3 to the output fibre 10, both corner cubes 1 and 2 are in the first position;
- from the input fibre 3 to the output fibre 9, the first corner cube 1 is in the second position and the second corner cube 2 is in the first position.

Figure 4 shows, in particular, the four combinations which select the collimator which receives the optical beam sent along the input optical fibre.

From this example of an embodiment it may be seen that in order to carry out the switching correctly the travel of the slide supporting the second corner cube must be twice that of the slide supporting the first.

According to an alternative embodiment of the present invention, it is possible to make a switch which incorporates more than two reflectors; the successive reflectors will be disposed in sequence facing each other, with the same traversing system. Each successive reflector will have a travel twice that of the preceding one, if traversing takes place in the same direction as that of the preceding reflectors. In a different configuration, each reflector may be traversed along a different traversing axis. It is also possible to use retroreflectors of different sizes, if the switch has to switch between a large number of output collimators, in order not to cause problems of misalignment between the output beams and the collimators.

It is also possible to have a plurality of input beams emerging from a plurality of collimators positioned at the terminations of optical fibres advantageously disposed parallel and adjacent to each other, in such a way as to selectively permit each of them to follow an optical path to one of the outputs of the switch.

A further embodiment of the present invention is to make an optical switch which uses a single corner cube which sends at least one input beam selectively to one of two output collimators. The corner cube moves on the slide of the type described above between the two said predetermined positions.

It should be noted that, in general, the reflecting element of the switch which moves between two predetermined positions may be a simple mirror, a prism or a corner cube. In all three configurations, the switch correctly deflects the optical beam from the input fibre to any of the output fibres.

However, a simple reflecting surface, in other words a mirror, is sensitive to the effects of misalignment which may sometimes result in only a partial collimation of the beam in one of the output collimators and consequently cause an attenuation of the optical signal passing through the switch. In this case, a considerable degree of stability is required of the actuators which move the mirror to the said predetermined positions, and sufficiently large output collimators are required to overcome any misalignments of the mirrors, even if these misalignments are small.

A prism used in place of a simple mirror can improve performance in terms of the attenuation arising from the said partial collimation, since it is not sensitive to the effects of misalignment which may be caused by rotations about the axis of conjunction between the two flat reflecting surfaces of which it consists.

The corner cube, as described above, is not sensitive to the effects of misalignment which may be caused by rotations about any reference axis; the only limit is the acceptance angle within which the beam incident on its surface must lie.

In all the possible configurations of the device, the optical path of the beams from the input collimator to any of the output collimators is of substantially the same length. The insertion losses are not only minimized but are also uniformly distributed among all the possible optical paths of the switch, thus maintaining a substantial equivalence of conditions in the beam leaving the switch.

Furthermore, the switching is of the mechanical type between the two different positions of the devices guiding the optical beam from the input fibre to the output fibre. This results in a simplification of the commands to be sent to the switching device; these commands may be of the digital type, thus ensuring better repeatability of the process and a much better performance in respect of crosstalk than that of other technologies, including non-mechanical types, for carrying out the switching operation.

Advantageously, the device makes it possible to further minimize the losses arising from the effects of misalignment of the components, by using the corner cube which has a particularly low sensitivity to the angular misalignments which are the most critical parameters for these devices.

## Claims

1. Optical switch comprising:
- an input optical collimator having a first axis of collimation of an optical beam;
- at least two output optical collimators, one having a second axis and one having a third axis of collimation of an optical beam;
- a device for the distribution of the optical beam directed along the said first collimation axis towards one of the said second and third axes of collimation of the optical beam, comprising at least one reflector movable between a first and a second predetermined position, which provides an optical connecting path, comprising at least one reflection, between the said input collimator and one of the said output collimators, in which each of the said first and second positions corresponds to the selection of one of the said output collimators.

2. Optical switch according to Claim 1, in which the said reflector is a trihedral or corner cube retroreflector.

3. Optical switch according to Claim 1, in which the said reflector is a prism.

4. Optical switch according to Claim 1, in which the said reflector is a mirror.

5. Optical switch according to Claim 1, in which the said distribution device additionally comprises an actuator for traversing the said reflector between the said first and second positions.

6. Optical switch according to Claim 5, in which the said actuator comprises a slide on which the said reflector is fixed in such a way that the axis of the reflector is substantially parallel to the axis of collimation of the said input collimator, a track in which the said slide is fitted slidably and which has a stop wall at each end, and a device for moving the slide from one wall to the other wall of the track.

7. Optical switch according to Claim 6, in which the said movement device comprises a pair of electromagnets disposed on the said walls and energized in push-pull mode.

8. Method for switching optical signals, comprising the following phases:
- generating an optical beam along an optical axis;
- reflecting said beam by means of a reflector;
- moving said reflector to one of two predetermined positions in such a way as to distribute the said beam selectively towards an output collimator.

9. Method for switching optical signals according to Claim 8, in which each reflector causes three reflections of the beam.

10. Method for switching optical signals according to Claim 8, in which each reflector causes two reflections of the beam.

11. Method for switching optical signals according to Claim 8, in which each reflector causes one reflection of the beam.

12. Method for switching optical signals according to Claim 8, in which the said phase of moving the said at least one reflector comprises moving, on a track having a stop wall at each end, a slide on which the said at least one reflector is fixed, by means of a device for moving the slide from one wall to the other wall of the track.

13. Method for switching optical signals according to Claim 8, in which the phase of moving comprises the energizing of one of a pair of electromagnets disposed on the said walls.

14. Method for switching optical signals according to Claim 8, in which the said distribution phase comprises:
- reflecting said beam by means of a second reflector
- moving said reflector to one of two predetermined positions in such a way as to distribute the said beam selectively towards an output collimator.
